## Europäisches Patentamt
## European Patent Office
## Office européen des brevets

(19)

(11) Numéro de publication: **0 280 598**
**B1**

(12)

# FASCICULE DE BREVET EUROPEEN

(45) Date de publication du fascicule du brevet:
**02.05.90**

(51) Int. Cl.⁴: **F16L 33/02**

(21) Numéro de dépôt: **88400229.6**

(22) Date de dépôt: **02.02.88**

(54) Collier de serrage à réserve d'élasticité.

(30) Priorité: **05.02.87 FR 8701426**

(43) Date de publication de la demande:
**31.08.88 Bulletin 88/35**

(45) Mention de la délivrance du brevet:
**02.05.90 Bulletin 90/18**

(84) Etats contractants désignés:
**AT BE CH DE ES FR GB GR IT LI LU NL SE**

(56) Documents cités:
**FR-A- 2 470 275**
**GB-A- 778 861**
**US-A- 3 475 793**

(73) Titulaire: **Etablissements CAILLAU, 28, rue Ernest Renan, F-92130 Issy-les-Moulineaux(FR)**

(72) Inventeur: **Calmettes, Lionel, 40, rue Georges Richard, F-41200 Romorantin(FR)**

(74) Mandataire: **Descourtieux, Philippe et al, CABINET BEAU de LOMENIE 55 rue d'Amsterdam, F-75008 Paris(FR)**

## Description

On connaît de nombreux types de colliers de serrage, notamment pour le raccordement étanche d'un tube souple emmanché sur un tuyau rigide. De tels colliers sont constitués essentiellement par une bande métallique enroulée sur elle-même, les deux extrémités de la bande étant munies d'organes complémentaires de serrage et/ou d'accrochage. Ces derniers sont choisis en fonction de l'utilisation ultérieure du collier. A titre d'exemple, on signalera en particulier les brevets français FR-A-2 410 757, 2 415 223 et 2 539 466.

Toutefois, dans certaines utilisations, notamment si le fluide véhiculé par les tuyaux peut atteindre des températures élevées, on constante des défauts d'étanchéité dans la zone de raccordement du tube souple sur le tuyau rigide. Ceci est souvent dû au fait que le matériau constituant le tube souple a tendance à fluer sous les effets conjugués de la température et du serrage du collier. Il est donc apparu intéressant de réaliser des colliers dits "à réserve d'élasticité", permettant de maintenir un serrage suffisant du tube souple malgré le fluage de ce dernier.

A cet égard, on notera également que, pour éviter ou, tout au moins, diminuer les risques de fluage du tube souple, il est judicieux de limiter les efforts de serrage à des valeurs déterminées en fonction de la nature du matériau souple et des conditions prévues d'utilisation.

Depuis longtemps, les fabricants de colliers de serrage utilisés notamment dans la construction automobile, ont cherché à résoudre simultanément les deux problèmes, quelque peu contradictoires, qui viennent d'être rappelés.

A cet égard, on signalera en particulier les brevets FR-A-2 470 275, GB-A-778 861 et US-A-3 475 793, le collier selon le dernier brevet étant muni d'une boucle sensiblement cylindrique.

Toutefois, les solutions déjà apportées aux difficultés résultant du fluage des tubes souples ne sont pas suffisantes pour satisfaire aux exigences de la technique moderne et, en outre, leur mise en oeuvre est quelquefois onéreuse. En particulier, on soulignera que, selon le brevet américain 3 475 793, il est nécessaire d'utiliser, pour constituer le collier de serrage, un métal dont les caractéristiques, et notamment sa limite d'élasticité, doivent être situées dans des plages assez précises. De tels métaux conviendront peut-être pour certaines applications mais seront inacceptables pour d'autres, rendant ainsi relativement onéreuse l'exploitatin de la solution proposée. Il semble enfin qu'aucune des solutions antérieures ne puisse donner de résultat satisfaisant en ce qui concerne la limitation, maintenant exigée, des efforts de serrage appliqués au tube souple.

L'invention a donc pour objet d'apporter un perfectionnement décisif aux colliers de serrage du type évoqué plus haut, permettant de satisfaire aux diverses exigences qui ont été rappelées.

Selon une première caractéristique essentielle de l'invention, la bande métallique du collier qui présente une boucle faisant saillie vers l'extérieur comprend en outre un ressort, constitué par un manchon généralement cylindrique et fendu longitudinalement, entourant ladite boucle. Les extrémités du ressort, en pratique les bords de la fente du manchon, prennent appui sur les extrémités de la boucle dans les zones de raccordement de celle-ci à la partie de la bande constituant le collier.

Grâce à cette première disposition, le métal constituant la bande du collier peut être de qualité ordinaire, compte tenu de l'utilisation prévue, cependant que la "réserve d'élasticité" résulte essentiellement des caractéristiques du manchon formant ressort. Le diamètre du manchon, son épaisseur et la nature du métal peuvent être déterminés indépendamment des caractéristiques du collier proprement dit, et notamment des moyens de serrage et/ou d'accrochage des extrémités de la bande.

Selon une caractéristique avantageuse importante de l'invention, des moyens sont prévus pour limiter l'écartement, dans le sens de la périphérie du collier, des deux extrémités de la boucle.

Il convient en effet d'éviter qu'au moment du serrage du collier sur un tube, la limite d'élasticité du ressort soit dépassée, ce qui empêcherait ultérieurement ce dernier de remplir correctement son rôle. En outre, il est quelquefois indispensable, comme on l'a déjà signalé, de limiter l'effort de serrage sur un tube souple. la disposition proposée permet d'atteindre ces objectifs car l'opérateur peut se rendre compte facilement qu'il a atteint au cours du serrage l'écartement admissible des extrémités de la boucle du collier.

L'invention sera mieux comprise et diverses autres caractéristiques avantageuses apparaîtront au cours de la description, qui va suivre, d'un mode de réalisation avantageux. A cet effet, on se reportera aux dessins annexés, dans lesquels :

- la figure 1 est une vue en perspective et éclatée d'un collier perfectionné selon l'invention, avant l'assemblage des divers éléments qui le constituent;
- la figure 2 est une vue latérale en coupe du collier de la figure 1, après son serrage sur un tube souple emmanché sur un tuyau rigide;
- la figure 3 est une vue de détail de l'un des éléments auxiliaires du collier.
- la figure 4 est une vue partielle, analogue à la figure 1, d'une variante de réalisation

Si l'on se reporte au dessin, on voit un collier de serrage constitué par une bande métallique 1 enroulée sur elle-même, dont les extrémités sont pourvues de moyens complémentaires de serrage et d'accrochage du type de ceux décrits dans le brevet français FR-A-2.539.466.

On soulignera à nouveau que les moyens de serrage et/ou d'accrochage sont sans incidence sur la réalisation de l'invention; il ne seront donc pas décrits en détail.

La bande 1 présente, à tout endroit judicieusement choisi de la périphérie du collier, une boucle 2, faisant saillie vers l'extérieur. De préférence, et comme représenté au dessin, la boucle 2 est sensiblement cylindrique et ses extrémités 2a et 2b se raccordent chacune à une portion de la bande 1.

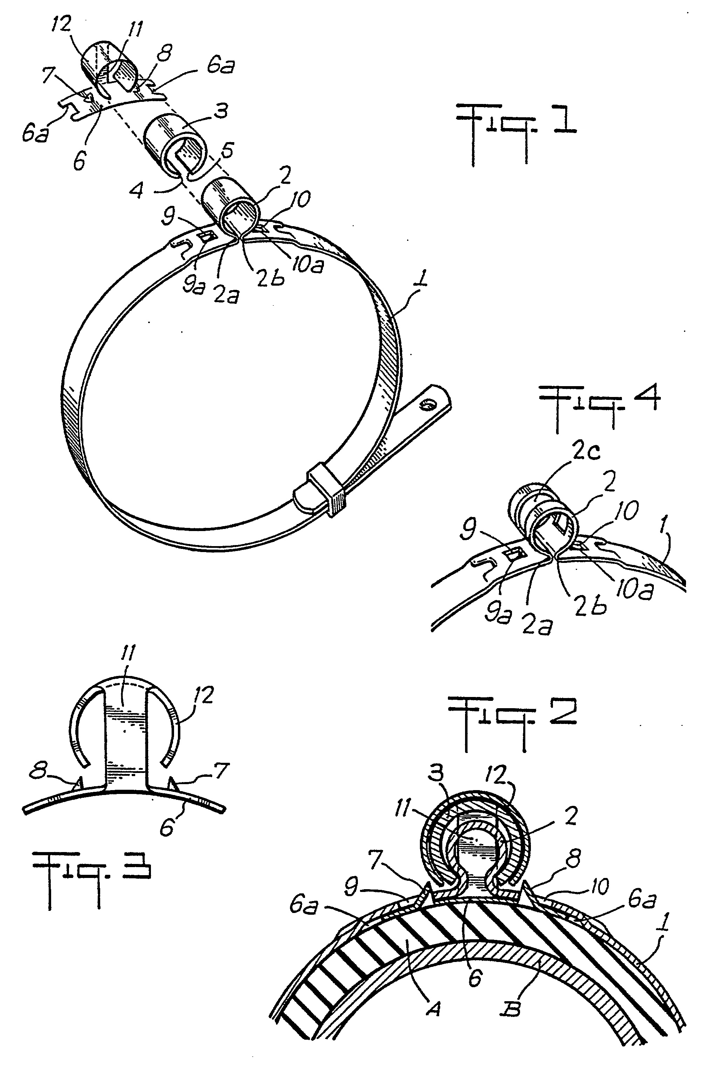

Dans la position non serrée du collier, visible sur la figure 1, les extrémités de la boucle sont pratiquement en contact l'une avec l'autre par leur face interne. Cependant, ainsi qu'on le voit sur la figure 4, la boucle 2 peut présenter un ajour central 2c, ne laissant subsister que les deux portions latérales de la boucle 2, au moins sur une partie de sa périphérie. L'intérêt de cette disposition sera précisé plus loin.

Un ressort 3 constitué par un simple manchon, généralement cylindrique et fendu longitudinalement, présente deux bords terminaux 4 et 5 légèrement espacés l'un de l'autre. Ce manchon peut être réalisé en tout métal approprié et sa longueur, de préférence égale à la largeur de la bande 1, dépend en fait de l'énergie qu'il doit être capable de restituer par suite de sa déformation élastique, ainsi qu'on le verra plus loin. La distance entre les bords 4 et 5 de la fente du manchon est aussi voisine que possible du double de l'épaisseur de la bande 1, de façon à permettre l'emmanchement facile du manchon le long de la boucle 2, les bords 4 et 5 glissant sur les extrémités de la boucle, tout en prenant appui sur elles et contribuant ainsi à les maintenir pratiquement en contact l'une avec l'autre, dans la position non serrée du collier.

Bien évidemment, lorsqu'il est monté sur elle, le manchon entoure la boucle 2, au moins sur une partie de sa longueur. Ceci implique que la forme du manchon soit compatible avec celle de la boucle, bien qu'à cet égard aucune forme particulière de l'un ou de l'autre ne soit imposée par l'invention.

Le collier comporte enfin avantageusement une semelle 6, de préférence de faible épaisseur, disposée sous la face interne de la bande 1, dans la zone de la boucle. On sait en effet que la périphérie interne d'un collier doit être continue, faute de quoi des fuites peuvent apparaître le long des lignes de discontinuité, si elles s'étendent de façon rectiligne sur toute la largeur de la bande.

Or, les zones de raccordement des extrémités 2a et 2b de la boucle à la bande du collier sont destinées à être écartées l'une de l'autre au cours du serrage du collier. La semelle 6 a donc pour premier rôle de maintenir en permanence la continuité de la périphérie interne du collier.

A cet égard, il faut noter qu'il est également avantageux de prévoir dans la bande 1, de part et d'autre de la boucle 2, un soyage correspondant à l'épaisseur de la semelle. De plus, cette dernière est de préférence pourvue, sur ses bords transversaux, d'une découpe 6a, rentrante ou saillante, en forme de U. La longueur du soyage est égale à celle de la semelle 6 et ses extrémités présentent une forme complémentaire de celle de la découpe 6a.

Cependant, la semelle 6 peut également constituer un moyen pour limiter l'écartement, dans le sens de la périphérie du collier, des extrémités 2a et 2b de la boucle 2 au cours du serrage du collier, et, par conséquent, une limitation des efforts appliqués par ces dernières aux bords terminaux 4 et 5 du manchon 3. On évite ainsi de faire subir au manchon des déformations au-delà de sa limite d'élasticité.

A cet effet, la semelle 6 comporte deux butées 7 et 8, faisant saillie sur sa face extérieure, réalisées de préférence sous forme de "crevés" convenablement dessinés. D'autre part, la bande 1 présente, de part et d'autre de la boucle 2, des ouvertures 9 et 10, de dimensions suffisantes pour recevoir les butées 7 et 8 de la semelle lorsque cette dernière est en place dans son logement constitué par le soyage de la bande 1. De préférence et comme représenté au dessin, les ouvertures 9 et 10 sont rectangulaires et leur bord transversal 9a-10a, situé au voisinage des zones de raccordement de la boucle 2, est rectiligne. La distance entre les butées 7 et 8 de la semelle est supérieure à la distance séparant les bords 9a et 10a des ouvertures de la bande, dans la position non serrée du collier, réprésentée sur la figure 1. Ainsi, les butées 7 et 8 et les bords 9a et 10a des ouvertures de la bande constituent des organes complémentaires d'accrochage susceptibles de venir en prise les uns avec les autres pour limiter l'ouverture de la boucle 2 au cours du serrage du collier.

Pour faciliter le montage et le maintien de la semelle sur le collier avant son utilisation, la semelle 6 est pourvue, sur l'un de ses bords longitudinaux, d'une patte 11 repliée perpendiculairement vers l'extérieur. A cette patte est fixée une enveloppe 12 dont la forme correspond sensiblement à celle du manchon 3 et qui est située au-dessus de la semelle 6.

Ainsi, après avoir emmanché le manchon 3 pour qu'il entoure la boucle 2, de la façon décrite plus haut, on engage l'enveloppe 12 par coulissement le long du manchon, cependant que la semelle 6 vient simultanément se placer dans son logement constitué par le soyage de la bande. Au cours de cette opération, les crevés 7 et 8 de la semelle sont engagés dans les ouvertures 9 et 10 de la bande sans pourtant être en contact avec les bords 9a et 10a des ouvertures.

On notera ici que l'élément auxiliaire que constituent la semelle 6 et l'enveloppe 12 qui lui est attachée peut être réalisé en une seule pièce à partir d'une feuille de métal qui sera avantageusement plus mince que la bande elle-même et qui n'a pas besoin d'être en matériau de même qualité.

De toute façon après l'assemblage, tel qu'il a été décrit, des trois éléments constitutifs du collier, le collier peut être manipulé sans risquer de perdre l'un d'entre eux et facilement emmanché puis serré sur un tube souple de la façon connue.

Le fonctionnement du collier selon l'invention est déjà apparu à l'homme du métier. On soulignera cependant à nouveau que le serrage du collier sur le tube souple A emmanché sur un tuyau rigide B (figure 2) sera poursuivi jusqu'à ce que les moyens complémentaires d'accrochage prévus en correspondance sur la semelle 6 et sur la bande 1, de part et d'autre de la boucle 2, viennent en prise les uns avec les autres. Le ressort 3 est alors tendu, cependant que les extrémités 2a et 2b de la boucle 2 sont écartées l'une de l'aure d'une distance prédéterminée limitant ainsi aussi bien la déformation du ressort 3 que les efforts exercés par le collier sur l tube à serrer. A cet égard, l'existence dans certains cas de l'ajour 2c, supprime la quasi totalité des efforts exercés sur le collier par la déformation de la boucle 2 elle-même, de sorte que ces derniers sont essentiellement déterminés par les caractéristiques et la déformation du ressort 3.

Si, dans certaines conditions, le matériau constituant le tube souple vient à fluer, provoquant ainsi une diminution du diamètre extérieur du tube souple et une diminution de son serrage le ressort 3 agit sur les deux extrméités de la boucle 2 pour les rapprocher l'une de l'autre et maintenir un serrage suffisant du tube.

L'invention peut être réalisée sur tous les types de colliers à bande et s'accommode parfaitement des procédés de fabrication actuels par roulage, emboutissage et pliage combinés. Elle sera particulièrement avantageuse pour les fabrications en grandes séries, telles que celles exigées par la construction automobile où l'utilisation des colliers selon l'invention n'exige pas d'autre condition que celles déjà connues pour l'emploi des colliers habituels. Plus précisément, l'invention permet de conserver les normes de serrage dans les fabrications utilisant les colliers connus, car elle n'entraîne aucune réduction ni aucune altération des efforts susceptibles d'être appliqués à un tube souple à serrer.

## Revendications

1. Collier de serrage, notamment pour le raccordement étanche d'un tube souple emmanché sur un tuyau rigide, comportant une bande métallique (1) enroulée sur elle-même et muni à chacune de ses extrémités de moyens complémentaires de serrage et/ou d'accrochage et présentant une boucle sensiblement cylindrique, faisant saillie vers l'extérieur, caractérisé en ce qu'un ressort (3), constitué par un manchon, généralement cylindrique et fendu longitudinalement, entoure ladite boucle, les bords (4, 5) et la fente dudit manchon prenant appui sur les extrémités (2a, 2b) de la boucle dans les zones de raccordement de celle-ci à la partie de la bande constituant le collier.

2. Collier selon la revendication 1, caractérisé en ce que la longueur du manchon (3) est sensiblement égale à la largeur de la bande (1).

3. Collier selon l'une quelconque des revendications précédentes, caractérisé en ce que, dans la position non serrée du collier, les deux extrémités (2a, 2b) de la boucle sont pratiquement en contact l'une avec l'autre par leur face interne.

4. Collier selon l'une quelconque des revendications précédentes, caractérisé en ce que la boucle (2) présente un ajour central (2c) s'étendant sur une partie au moins de sa périphérie.

5. Collier selon l'une quelconque des revendications précédentes, caractérisé en ce que des moyens (7, 8, 9a, 10a) sont prévus pour limiter l'écartement, dans le sens de la périphérie du collier, des deux extrémités (2a, 2b) de la boucle.

6. Collier selon la revendication 5, caractérisé en ce qu'une semelle (6), s'étendant longitudinalement, est disposée, sous la face interne de la bande dans la région de la boucle (2), ladite semelle présentant des organes d'accrochage (7, 8) faisant saillie sur sa face extérieure et coopérant, lorsque le collier est dans sa position serrée, avec des organes complémentaires d'accrochage (9a, 10a) prévus en correspondance sur la bande, de part et d'autre de la boucle.

7. Collier selon la revendication 6, caractérisé en ce que les organes d'accrochage (7, 8) prévus sur la semelle sont constitués par des crevés formant deux butées situées de part et d'autre de la boucle (2).

8. Collier selon la revendication 7, caractérisé en ce que les organes complémentaires d'accrochage prévus sur la bande (2) sont constitués par deux ouvertures (9, 10) dont les bords (9a, 10a), situés au voisinage des zones de raccordement de la boucle, sont de préférence rectilignes et disposés transversalement à la bande, la distance desdits bords transversaux (9a, 10a) étant inférieure à la distance des butées (7, 8) correspondantes de la semelle (6).

9. Collier selon l'une quelconque des revendications 6 à 8, caractérisé en ce qu'une découpe (6a), rentrante ou saillante, en forme de U, est prévue dans les bords transversaux de la semelle (6), cependant que, dans la région de la boucle (2), la bande (1) présente un soyage, correspondant sensiblement à l'épaisseur de la semelle (6), dont la longueur est égale à celle de la semelle et dont les extrémités ont une forme complémentaire de la découpe des bords transversaux de la semelle.

10. Collier selon l'une quelconque des revendications 6 à 9, caractérisé en ce que, sur l'un de ses bords longitudinaux, la semelle (6) est pourvue d'une patte (11) repliée perpendiculairement vers l'extérieur, cependant qu'une enveloppe (12) est attachée à ladite patte et présente une forme correspondant sensiblement à celle de la surface extérieure du manchon (3) constituant le ressort de la boucle (2).

## Patentansprüche

1. Schlauchklemme, insbesondere für den dichten Anschluß eines Schlauchs an einem starren Rohr, umfassend ein aufgerolltes Metallband (1), welches an jedem seiner Enden mit komplementären Klemm- und/oder Verhakungsmitteln versehen ist und eine nach außen abstehende, im wesentlichen zylindrische Schlinge (2) umfaßt, dadurch gekennzeichnet, daß eine aus einer im allgemeinen zylindrischen Muffe gebildete und der Länge nach mit einem Schlitz versehene Feder (3) die Schlinge umgibt, wobei die Ränder (4, 5) des Schlitzes der Muffe an den Enden (2a, 2b) der Schlinge im Anschlußbereich derselben an dem die Schlauchklemme bildenden Teil des Bandes anliegen.

2. Schlauchklemme nach Anspruch 1, dadurch gekennzeichnet, daß die Länge der Muffe (3) im wesentlichen gleich ist der Breite des Bandes (1).

3. Schlauchklemme nach einem der vorhergehenden Ansprüche, dadurch gekennzeichnet, daß die beiden Enden (2a, 2b) der Schlinge in der nichtgeklemmten Position der Schlauchklemme über ihre Innenflächen praktisch miteinander in Kontakt stehen.

4. Schlauchklemme nach einem der vorhergehenden Ansprüche, dadurch gekennzeichnet, daß die Schlinge (2) einen zentralen Durchbruch (2c) aufweist, der sich zumindest über einen Teil ihres Umfanges erstreckt.

5. Schlauchklemme nach einem der vorhergehenden Ansprüche, dadurch gekennzeichnet, daß Mittel (7, 8, 9a, 10a) zur Begrenzung des Abstandes der beiden Enden (2a, 2b) der Schlinge in Umfangsrichtung der Schlauchklemme vorgesehen sind.

6. Schlauchklemme nach Anspruch 5, dadurch gekennzeichnet, daß ein sich in Längsrichtung erstreckender Gurt (6) unter der Innenseite des Bandes im Bereich der Schlinge (2) angeordnet ist, welcher Gurt Verhakungsorgane (7, 8) aufweist, die von ihrer Außenseite abstehen und in der festgeklemmten Position der Schlauchklemme mit komplementären Verhakungsmitteln (9a, 10a), die entsprechend am Band beiderseits der Schlinge vorgesehen sind, zusammenwirken.

7. Schlauchklemme nach Anspruch 6, dadurch gekennzeichnet, daß die am Gurt vorgesehenen Verhakungsorgane (7, 8) durch zwei beiderseits der Schlinge (2) befindliche Anschläge bildende Prägungen gebildet sind.

8. Schlauchklemme nach Anspruch 7, dadurch gekennzeichnet, daß die komplementären Verhakungsorgane, die am Band (2) vorgesehen sind, aus zwei Öffnungen (9, 10) bestehen, deren nahe der Anschlußzonen der Schlinge befindliche Ränder (9a, 10a) vorzugsweise geradlinig und quer zum Band angeordnet sind, wobei der Abstand dieser Querränder (9a, 10a) geringer ist als der Abstand der entsprechenden Anschläge (7, 8) des Gurtes (6).

9. Schlauchklemme nach einem der Ansprüche 6 bis 8, dadurch gekennzeichnet, daß ein ein- oder vorspringender Einschnitt (6a) in Form eines U in den Querrändern des Gurtes (6) vorgesehen ist, wobei das Band (1) im Bereich der Schlinge (2) einen im wesentlichen der Dicke des Gurtes (6) entsprechenden Durchstich aufweist, dessen Länge gleich jener des Gurtes ist und dessen Enden zum Einschnitt der Querränder des Gurtes komplementäre Gestalt haben.

10. Schlauchklemme nach einem der Ansprüche 6 bis 9, dadurch gekennzeichnet, daß der Gurt (6) an einem seiner Längsränder mit einer senkrecht nach außen umgebogenen Pratze (11) versehen ist, wobei eine Hülle (12) an der Pratze angebracht ist und eine im wesentlichen zur Außenfläche der die Feder der Schlinge (2) bildenden Muffe (3) korrespondierende Gestalt aufweist.

## Claims

1. A clamp, particularly for hermetically connecting a flexible hose fitted on a rigid pipe, comprising a metal band (1) wound on itself and provided at each of its ends with complementary tightening and/or fastening means, having a substantially cylindrical, outwardly projecting loop (2), characterized in that a spring (3), constituted by a generally cylindrical, longitudinally split sleeve, surrounds said loop, the edges (4, 5) of the slot of said sleeve abutting on the ends (2a, 2b) of the loop in the zones of connection of the latter to that part of the band constituting the clamp.

2. Clamp according to claim 1, characterized in that the length of the sleeve (3) is substantially equal to the width of the band (1).

3. Clamp according to any one of the preceding claims, characterized in that, in the non-tightened position of the clamp, the two ends (2a, 2b) of the loop are virtually in contact with each other by their inner face.

4. Clamp according to any one of the preceding claims, characterized in that the loop (2) presents a central opening (2c) extending over at least a part of its periphery.

5. Clamp according to any one of the preceding claims, characterized in that means (7, 8, 9a, 10a) are provided for limiting the spaced apart relationship, in the sense of the periphery of the clamp, of the two ends (2a, 2b) of the loop.

6. Clamp according to claim 5, characterized in that a longitudinally extending plate (6) is disposed, beneath the inner face of the band in the region of the loop (2), said plate presenting fastening members (7, 8) projecting on its outer face and cooperating, when the clamp is in its tightened position, with complementary fastening members (9a, 10a) provided in register on the band, on either side of the loop.

7. Clamp according to claim 6, characterized in that the fastening members (7, 8) provided on the plate are constituted by stamped portions forming two stops located on either side of the loop (2).

8. Clamp according to claim 7, characterized in that the complementary fastening members provided on the band (1) are constituted by two openings (9, 10) of which the edges (9a, 10a), located in the vicinity of the zones of connection of the loop, are preferably rectilinear and disposed transversely to the band, the distance of said transverse edges (9a, 10a) being less than the distance of the corresponding stops (7, 8) of the plate (6).

9. Clamp according to any one of claims 6 to 8, characterized in that a re-entrant or projecting cutout (6a), in the form of a U, is provided in the transverse edges of the plate (6), whereas, in the region of the loop (2), the band (1) presents a housing, corresponding substantially to the thickness of the plate (6), whose length is equal to that of the plate and whose ends have a shape complementary of the cut-out in the transverse edges of the plate.

10. Clamp according to any one of claims 6 to 9, characterized in that, on one of its longitudinal edges, the plate (6) is provided with a tab (11) bent perpendicularly outwardly, whereas an envelope (12) is attached to said tab and presents a shape corresponding substantially to that of the outer surface of the sleeve (3) constituting the spring of the loop (2).

Fig. 1

Fig. 4

Fig. 2

Fig. 3